# EUROPEAN PATENT APPLICATION

(11) **EP 4 570 457 A1**
(43) Date of publication of application: **18.06.2025**
(21) Application number: 23216019.2
(22) Date of filing: 12.12.2023
(51) Int. Cl.: B25J 21/02, D06F 59/04

(54) **GLOVE HOLDER AND CORRESPONDING METHOD**

(71) Applicant: SKAN AG, 4123 Allschwil (CH)
(72) Inventor: Thommen, Freddy, 4053 Basel (CH); Balmer, Dennis, 4053 Basel (CH); Richardson, Andrew, 68220 Michelbach-le-Haut (FR)
(74) Representative: Mertzlufft-Paufler, Cornelius

(57) **Abstract**

It is proposed to use and/or form flexible sections (14) on a glove holder (1) that allow to elastically compress a lateral span (17) of the glove holder (1).

## Description

The invention concerns a glove holder with a frame that is operable to be attached to an outer side of a containment and with a support that protrudes from said frame and is operable to carry an arm section of a glovebox glove and with at least two finger elements formed at a free end of said support and each insertable into one finger section of said glovebox glove.

Glovebox gloves have been used to protect persons that manipulate dangerous and/or sensitive substances and products in containments like isolators, gloveboxes, restricted access barrier systems (RABS, open or closed) and the like controlled environment.

Usually, during preparation of the containment for its intended use, in particular during decontamination, the glovebox gloves will be put on glove holders so that they do not interfere with the preparation process.

Various designs for glove holders have been proposed and used in industrial processes.

The use of finger elements is advantageous because it helps to keep the respective finger section of the glove at a defined position. This is essential for establishing reproduceable preparation procedures. By using more than one finger element one can, in addition, prevent the finger sections to contact each other during decontamination. Such a contact may result in insufficient decontamination results.

The invention concerns further a method to insert a glove holder into a glovebox glove.

As the glovebox gloves tend to be made of comparatively stiff material, putting a glove on its glove holder is a time-consuming task, especially if the glove holder has more than one finger element.

The invention is based on the problem of how to simplify the use of a glove holder.

According to the invention, the features of claim 1 are proposed. In particular, to solve the problem, the invention proposes, for a glove holder as described in the beginning, that the glove holder has a flexible section that allows to elastically bend the first finger element towards a second finger element of the at least two finger elements such that a lateral span of the glove holder at the position of the finger elements can be reduced. This allows the finger elements to be in an extended state during normal use, so that the corresponding finger sections of the glovebox glove keep desired distance from each other. At the same time, a flexible section that allows to compress laterally the glove holder makes it easier to pass the arm section and in particular the wrist section or any other bottleneck of the glovebox glove.

A flexible section, for the purpose of this invention, may be characterised for instance by the ability to develop restoration forces upon deformation.

In an embodiment of the invention, the flexible section is at least partially located on at least one first finger element of the at least two finger elements. Thus, the lateral span of a hand formed by the glove holder can be reduced easily.

In an embodiment of the invention, the flexible section is at least partially located on the support. Thus, an alternative solution is provided that allows to form stiff or inflexible finger elements or even finger elements that have joints without restoring forces. This solution is especially useful when the support consists of more than one part that can be moved against each other.

In an embodiment of the invention, two or more than two or all of the at least two finger elements are arranged in a common plane. Thus, a simple arrangement of the finger elements can be achieved that is simple to manufacture.

In an embodiment of the invention, at least one finger element is arranged outside a common plan spanned by two or more finger elements. Thus, a more natural pose of the finger elements can be achieved.

Preferably, the off-plane finger element is one with the flexible section. Thus, a larger bending angle can be achieved without collision with the other finger elements.

In an embodiment of the invention, the at least two finger elements are provided, at least in their glove contact regions, with a surface of a material with reduced friction. This may allow easier insertion into the glovebox glove.

For instance, reduced friction may be achieved with a surface of a plastic material and/or of a defined (sufficiently smooth) surface quality. Reduced friction may, for instance, be defined relative to a frame holding the support.

In an embodiment of the invention, the flexible section has an elongated cross section. Thus, a preferred plane in which the flexible section can be bent is defined, while changes of the arrangement of finger elements perpendicular to that plane or direction may be reduced.

In an embodiment of the invention, the first finger element has a preferred bending direction which is oriented towards the second finger element. Thus, the lateral span or extension can be reduced in a defined matter. Unintentional (sideward) evasion of the finger element while pressing it against another finger element may be reduced or avoided.

In an embodiment of the invention, the at least two finger elements comprise at least two first finger elements that each have a flexible section that allows to bend each first finger element towards the other first finger element and/or a, in particular the already mentioned, second finger element of the at least two finger elements. This embodiment is particularly advantageous if one wants to exert a symmetric compresion.

In an embodiment of the invention, the at least two finger elements comprise outer finger elements and inner finger elements, in particular whereby the outer finger elements are attached to the support at a distance from where the inner finger elements are attached to the support. Thus, one can easily bend away outer finger elements in order to pass a bottleneck in the glovebox glove.

In an embodiment of the invention, the first finger element is made of plastic. Plastic material (like polymerized material) is easy to clean and provides in many case the needed springiness to ensure that the finger elements unfold inside the hand section of the glovebox glove.

Suitable materials include POM (Polyoxymethylene), PP (Polypropylen), EPDM (ethylene propylene diene monomer), Silicon or a POM PTFE (Polytetrafluorethylene) blend or a blend of two or more of those ingredients or a blend of one or more of those ingredients with an additional material.

In a preferred embodiment, all of the at least two finger elements are made of plastic.

In an embodiment of the invention, the support is of different springiness than the at least one finger element.

In an embodiment of the invention, at least two finger elements have different springiness. Thus, the flexibility may be adapted to specific requirements.

Alternatively or additionally, at least two finger elements have coinciding springiness. The invention has discovered that a symmetric arrangement in terms of springiness provides the best handling properties.

Alternatively or in addition, the problem described in the beginning is solved by the features of the first independent method claim. In particular, for a method as described in the introduction, the at least one finger element of the glove holder is elastically bent towards a second finger element to pass an arm section, in particular a wrist part of the arm section, of the glovebox glove and subsequently released. This allows to insert a compressed glove holder into the glovebox glove.

Alternatively or in addition, the problem described in the beginning is solved by the features of the second independent method claim. In particular, for a method to insert a glove holder into a glovebox glove, in particular a glove holder as claimed and/or as described in this document, a fold of the glovebox glove is compared to a scaling presented on the glove holder. This provides an easy means to verify whether the glove holder is inserted correctly into the glove.

In an embodiment of the invention, the fold is created by pulling the glovebox glove against the glove holder on one side and against its fixation on the containment on the other side. This provides a defined way to create reproducibly a fold for verification with the scaling.

The invention is now described in more detail by means of several embodiment examples, but is not limited to the embodiment examples. Further embodiments result from combining the features of individual or several claims with each other and/or with individual or several features of the embodiment examples.

The drawings show schematically
- Fig. 1: a glove holder according to the invention in a position of use (left) and a cross section (right) along a cutting plane indicated on the left side,
- Fig. 2: the insertion of the glove holder of fig. 1 into a glovebox glove,
- Fig. 3: another glove holder according to the in a position of use (left) and a cross section (right) along a cutting plane indicated on the left side,
- Fig. 4: another glove holder without frame and
- Fig. 5: the use of the glove holder of fig. 1 in a method according to the invention.

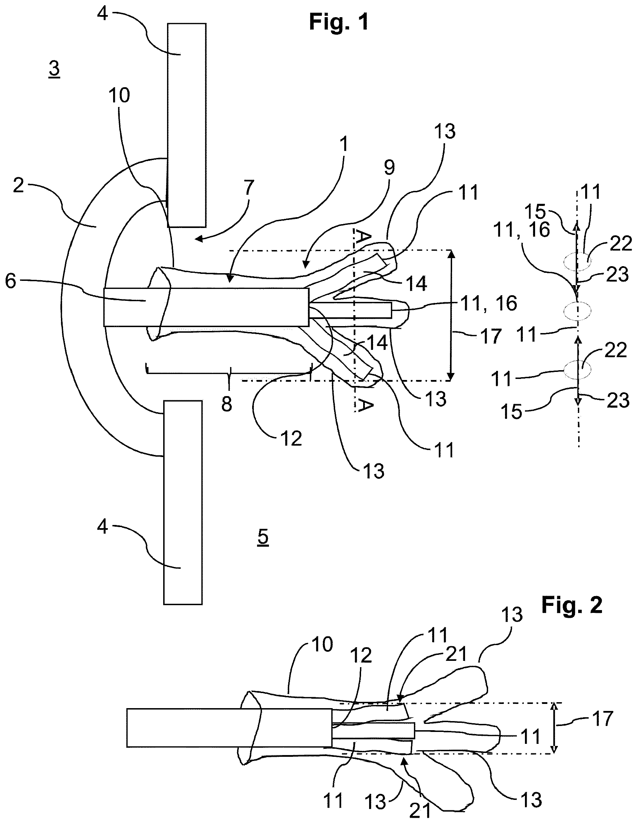

Fig. 1 is a schematic view of a glove holder 1 according to the invention. The glove holder 1 has a frame 2 that can be mounted on an outer side 3 of a containment 4 (e.g. an isolator, an RABS or a glovebox).

To the frame 2 is attached a support 6 that protrudes from the frame 2 in such a way that when the frame 2 is attached onto the containment 4 the support 6 will be oriented towards a glove port 7 and may be arranged partially in the interior 5.

In use, an arm section 8 (including a wrist part 9) of a glovebox glove 10 is slipped over the glove holder 1.

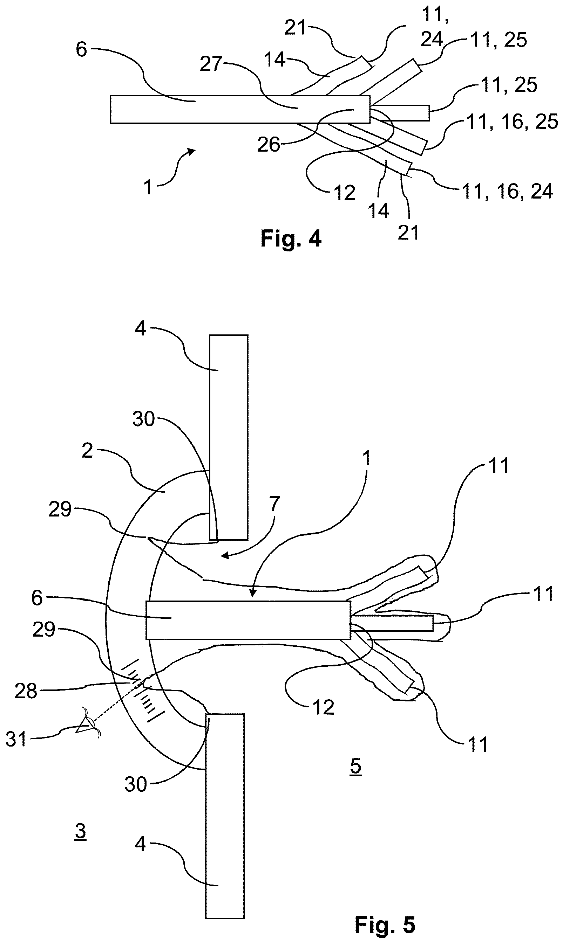

The glovebox glove 10 is attached to the containment 4 in the usual manner (not shown here for simplicity, but see Fig. 4).

Finger elements 11 are formed at a free end 12 of the support 6.

In this embodiment, to simplify the drawing, only three finger elements 11 are shown, while the glove holder 1 in reality may have five finger elements 11, one for each finger section 13 of the glovebox glove 10.

As indicated in fig. 1, the finger elements 11 are arranged so that the finger sections 13 are pointing away from each other, thereby avoiding unwanted contact that could cast dangerous shadows during decontamination.

As the arm section 8 and in particular the wrist part 9 of it form bottlenecks into the glovebox glove 10, the glove holder 1 has at least one flexible section 14 that allows to bend the finger elements 11 towards each other.

This is indicated in the view on the right side by arrows 15, where the outer finger elements 11 can be bend towards the middle, second finger element 16.

Thus, a lateral span 17 of the glove holder 1 at the finger elements 11 can be reduced, and the glove holder 1 can be easily inserted into the glovebox glove 10, as shown in fig. 2.

In other words, fig. 1 shows an extended state of the glove holder 1 suitable for decontamination, whereas fig. 2 shows a compressed state of the glove holder 1 suitable for slipping over of the glovebox glove 10.

In the embodiment of fig. 1 and 2, the flexible section 14 is formed in some of the finger elements 11. In fact, in this embodiment, the finger elements 11 are made of an elastically deformable material to form flexible sections 14.

In a preferred embodiment (not shown), all finger elements 11 are made of elastically deformable material.

As can be seen from the right drawing in fig. 1, all finger elements 11 are arranged in a common plane 18. This creates a flat stretch of the glovebox glove 10.

In further embodiments of the invention, the finger elements 11 can be arranged differently, for instance such that the finger elements 11 describe a circle so that they more closely resemble a human hand in a natural position.

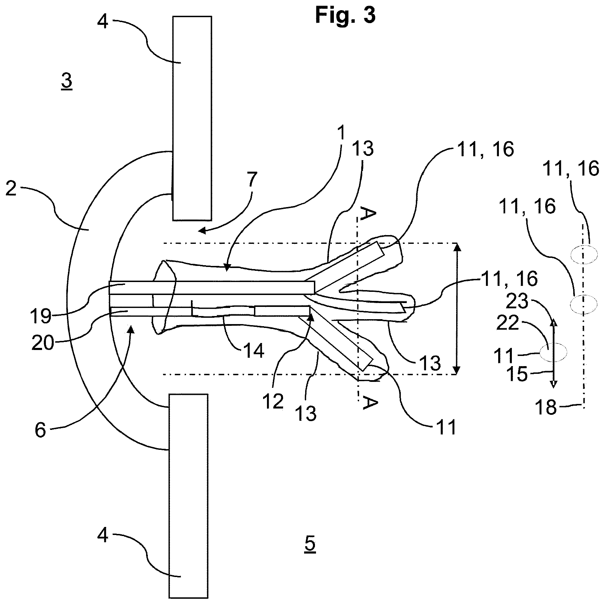

Fig. 3 shows another embodiment of the invention. Structurally and/or functionally similar or identical components are designated with the same reference symbols and are not described separately. The comments on figs. 1 and 2 therefore apply accordingly to fig. 3.

In Fig. 3, the support 6 has at least two parts 19, 20 that run in parallel to each other.

One part 19 carries two finger elements 11 at the free end 12 of the support 6, while the other part 20 carries one finger element 11 at the free end 12.

The part 20 has a flexible section 14 so that the finger element 11 of the part 20 can be moved towards the second finger elements 16 of the part 19. Thus, similarly to the embodiment of fig. 1, the lateral span 17 of the finger elements 11 can be reduced, allowing the glove holder 1 to pass the bottleneck of the wrist part 9.

In further embodiments, also the part 19 may have a flexible section 14 and/or some or all of the finger elements 11 may have flexible sections 14.

In fig. 3, to the right, it is shown an example where the finger element 11 that may be moved by bending the flexible section 14 lies off-plane with respect to the remaining (second) finger elements 16. Thus, the finger elements 11 of the part 20 can bypass the second finger elements 16 to achieve a compressed state of the glove holder 1.

Turning back to figs. 1 and 2, to ease slipping over of the glovebox glove 10, at least at glove contact regions 21 (cf. fig. 2) the glove holder 1 is provided with a surface of reduced friction. In some embodiments, this is achieved by an appropriate surface treatment, in other embodiments, this is achieved by an appropriate coating, while in yet other embodiments, this is achieved by an appropriate choice of material for the finger elements 11.

In the embodiments shown, the support 6 and the finger elements 11 are made of POM or another plastic material in order to provide a smooth surface in the glove contact regions 21.

These measures may also be present in the embodiment of fig. 3.

In figs. 1 and 3, it is shown that the finger elements 11 have an elongated cross section 22 that defines a preferred bending direction 23.

Fig. 4 shows another embodiment of the invention. Structurally and/or functionally similar or identical components are designated with the same reference symbols and are not described separately. The comments on figs. 1 to 3 therefore apply accordingly to fig. 4.

The glove holder 1 has five finger elements 11.

The outer finger elements 24 have flexible sections 14 each so that they can be elastically bent towards each other in order to reduce a lateral span 17.

The inner finger elements 25 are attached to the support 6 at a connecting point 26 that is spaced apart from a connecting point 27 of the outer finger elements 24.

The inner elements 25 may or may not each have a flexible section 14.

It can be seen that the outer finger elements 24 may be of differing length, thereby simulating a thumb and a little finger.

It has turned out to be very helpful for slipping over the glovebox glove 10 if despite of differing geometry, the outer finger elements 24 have the same springiness in order to achieve a symmetric lateral compression.

The spinginess of the inner finger elements 25 may differ from the springiness of the outer finger elements 24.

During operation, as can be seen from a comparison of figs. 1 and 2, at least one finger element 11 of the glove holder 1 is bent elastically towards one of the remaining finger elements 11, in particular towards a second finger element 16.

In order to verify whether a glove holder 1 has been inserted completely into a glovebox glove 10, which is difficult to assess from the outside as the glovebox glove 10 will be partially obscured by the glove port 7, the frame 2 and/or the support 6 (or any suitable part of the glove holder 1) is/are provided with a scaling 28.

If a defined fold 29 is created in the glovebox glove 10, for instance by pulling the glovebox glove 10 against the glove holder 1 and against a fixation 30 of the glovebox glove 10 to the containment 4, a user 31 may read off the position of the fold 29 on the scaling 28. The result may be noted down in a report.

In general, it can be said that the invention proposes a use and/or a formation of flexible sections 14 on a glove holder 1 that allows to elastically compress a lateral span 17 of the glove holder 1.

### List of reference numerals

- 1: glove holder
- 2: frame
- 3: outer side
- 4: containment
- 5: interior
- 6: support
- 7: glove port
- 8: arm section
- 9: wrist part
- 10: glovebox glove
- 11: (first) finger element
- 12: free end
- 13: finger section
- 14: flexible section
- 15: arrow
- 16: (second) finger element
- 17: lateral span
- 18: plane
- 19: part of 6
- 20: part of 6
- 21: glove contact region
- 22: cross section
- 23: bending direction
- 24: outer finger element
- 25: inner finger element
- 26: connecting point
- 27: connecting point
- 28: scaling
- 29: fold
- 30: fixation
- 31: user

## Claims

1. Glove holder (1) with a frame (2) that is operable to be attached to an outer side (3) of a containment (4) and with a support (6) that protrudes from said frame (2) and is operable to carry an arm section (8) of a glovebox glove (10) and with at least two finger elements (11) formed at a free end (12) of said support (6) and each insertable into one finger section (13) of said glovebox glove (10), **characterised in that** the glove holder (1) has has a flexible section (14) that allows to elastically bend the first finger element (11) towards a second finger element (16) of the at least two finger elements (11) such that a lateral span (17) of the glove holder (1) at a position of the finger elements (11) can be reduced.

2. Glove holder (1) according to the preceding claim, **characterised in that** the flexible section (14) is at least partially located on at least one first finger element (11) of the at least two finger elements (11).

3. Glove holder (1) according to any of the preceding claims, **characterised in that** the flexible section (14) is at least partially located on the support (6).

4. Glove holder (1) according to any of the preceding claims, **characterised in that** two or more than two or all of the at least two finger elements (11) are arranged in a common plane (18).

5. Glove holder (1) according to any of the preceding claims, **characterised in that** at least one finger element (11), preferably a finger element (11) with the flexible section (14), is arranged outside a common plane (18) spanned by two or more finger elements (11).

6. Glove holder (1) according to any of the preceding claims, **characterised in that** the at least two finger elements (11) are provided, at least in their glove contact regions (21), with a surface of a material with reduced friction, in particular with a surface of a plastic material and/or of a defined surface quality.

7. Glove holder (1)according to any of the preceding claims, **characterised in that** the flexible section (14) has an elongated cross section (22).

8. Glove holder according to any of the preceding claims, **characterised in that** the first finger element (11) has a prefered bending direction (23) which is oriented towards the second finger element (16).

9. Glove holder according to any of the preceding claims, **characterised in that** the at least two finger elements (11) comprise at least two first finger elements (11) that each have a flexible section (14) that allows to bend each first finger element (11) towards the other first finger element (11) and/or the or a second finger element (16) of the at least two finger elements (11).

10. Glove holder according to any of the preceding claims, characterised the at least two finger elements (11) comprise outer finger elements (24) and inner finger elements (25), in particular whereby the outer finger elements (24) are attached to the support (6) at a distance from where the inner finger elements (25) are attached to the support (6).

11. Glove holder (1) according to any of the preceding claims, **characterised in that** the first finger element (11), in particular all of the at least two finger elements (11), are made of plastic, in particular POM, PDM, EPDM (ethylene propylene diene monomer), PP (Polypropylen), Silicon or a POM PTFE blend or a blend of two or more of those ingredients or a blend of one or more of those ingredients with an additional material.

12. Glove holder (1) according to any of the preceding claims, **characterised in that** the support (6) is of different springiness than the at least one finger element (11) and/or that at least two finger elements (11) have different springiness and/or at least two finger elements (11), preferably at least two finger elements (11) of differing geometry and/or two outer finger elements (24), have coinciding springiness.

13. A method to insert a glove holder (1), in particular a glove holder (1) according to any of the preceding claims, into a glovebox glove (10), **characterised in that** at least one finger element (11) of the glove holder (1) is elastically bend towards a second finger element (16) to pass an arm section (8), in particular a wrist part (9) of the arm section (8), of the glovebox glove (10) and subsequently released.

14. A method to insert a glove holder (1), in particular a glove holder (1) according to any of the preceding claims 1 to 12, into a glovebox glove (10), in particular a method according to the preceding claim, **characterised in that** a fold (29) of the glovebox glove (10) is compared to a scaling (28) presented on the glove holder (1).

15. A method according to the preceding claim, **characterised in that** the fold (29) is created by pulling the glovebox glove (10) against the glove holder (1) on one side and against its fixation (30) on the containment (4) on the other side.
